# EUROPEAN PATENT APPLICATION

(11) **EP 3 611 636 A1**
(43) Date of publication of application: **19.02.2020**
(21) Application number: 18784216.6
(22) Date of filing: 28.03.2018
(51) Int. Cl.: G06F 17/27, G06F 17/22

(54) **INFORMATION PROCESSING DEVICE AND INFORMATION PROCESSING METHOD**

(30) Priority: 11.04.2017 JP 2017077922
(71) Applicant: Sony Corporation, Tokyo 108-0075 (JP)
(72) Inventor: MITANI Ryosuke, Tokyo 108-0075 (JP)
(74) Representative: MFG Patentanwälte Meyer-Wildhagen Meggle-Freund Gerhard PartG mbB
(86) International application number: PCT/JP2018/012715
(87) International publication number: WO 2018/190128

(57) **Abstract**

The present technology relates to an information processing apparatus and an information processing method capable of improving prediction accuracy when predicting and presenting the next input character candidate.

The information processing apparatus determines and outputs a semantic frame including a word obtained by predicting a character string to be input next from information indicating an input character string. The present technology can be applied to, for example, an information processing apparatus that predicts and outputs a character string to be input next from a character string input by a user through sentence generation software, a browser, or the like.

## Description

### TECHNICAL FIELD

The present technology relates to an information processing apparatus and an information processing method, in particular to an information processing apparatus and an information processing method capable of improving prediction accuracy when predicting and presenting the next input character candidate.

### BACKGROUND ART

Some software for generating a sentence or character conversion software for converting input characters into kanji characters or the like has an input completion function that predicts a character string to be input next from a character string input by that time and presents the predicted character string as an input character candidate (see, for example, Patent Document 1). In the input completion function, for example, the next input character candidate is predicted by referring to sequence information of consecutive words of the input character string.

### CITATION LIST

### PATENT DOCUMENT

Patent Document 1: JP 2012-150759 A

### SUMMARY OF THE INVENTION

### PROBLEMS TO BE SOLVED BY THE INVENTION

A method for predicting the next input character candidate by using only words of an input character string as information has not been able to improve prediction accuracy so much.

The present technology has been made in view of such a situation, and makes it possible to improve prediction accuracy when predicting and presenting the next input character candidate.

### SOLUTIONS TO PROBLEMS

An information processing apparatus according to an aspect of the present technology includes a semantic frame determination unit configured to determine and output a semantic frame including a word obtained by predicting a character string to be input next from information indicating an input character string.

An information processing method according to an aspect of the present technology includes a step of determining and outputting, by an information processing apparatus, a semantic frame including a word obtained by predicting a character string to be input next from information indicating an input character string.

In an aspect of the present technology, a semantic frame including a word obtained by predicting a character string to be input next is determined and output from information indicating an input character string.

Note that the information processing apparatus according to an aspect of the present technology can be achieved by causing a computer to execute a program.

Furthermore, in order to achieve the information processing apparatus according to an aspect of the present technology, the program to be executed by the computer can be provided by being transmitted through a transmission medium or recorded on a recording medium.

The information processing apparatus may be an independent apparatus or an internal block constituting one apparatus.

### EFFECTS OF THE INVENTION

According to an aspect of the present technology, prediction accuracy when the next input character candidate is predicted and presented can be improved.

Note that effects described herein are not necessarily limited, and any of the effects described in the present disclosure may be obtained.

### BRIEF DESCRIPTION OF DRAWINGS

Fig. 1 is a block diagram illustrating a configuration example of a first embodiment of an information processing apparatus to which the present technology is applied.
Fig. 2 is a diagram for describing a data structure of a semantic frame.
Fig. 3 is a diagram illustrating an example of the semantic frame.
Fig. 4 is a flowchart for describing input character prediction candidate generation processing according to the first embodiment.
Fig. 5 is a flowchart for describing generation processing of a semantic frame DB and a synonym/near-synonym dictionary DB.
Fig. 6 is a diagram illustrating a modification of the information processing apparatus according to the first embodiment.
Fig. 7 is a block diagram illustrating a configuration example of a second embodiment of the information processing apparatus to which the present technology is applied.
Fig. 8 is a diagram illustrating an example of an event that can be acquired as a situation related to a user.
Fig. 9 is a diagram illustrating an example of an event that can be acquired as a situation related to the user.
Fig. 10 is a flowchart for describing input character prediction candidate generation processing according to the second embodiment.
Fig. 11 is a diagram illustrating a modification of the information processing apparatus according to the second embodiment.
Fig. 12 is a diagram illustrating a modification of the information processing apparatus according to the second embodiment.
Fig. 13 is a block diagram illustrating a configuration example of an embodiment of a computer to which the present technology is applied.

### MODE FOR CARRYING OUT THE INVENTION

Hereinafter, a mode for carrying out the present technology (hereinafter referred to as an embodiment) will be described. Note that the description will be made in the following order.
1. First Embodiment
2. Second Embodiment
3. Computer Configuration Example

### <1. First Embodiment>

### <Block Diagram of Information Processing Apparatus>

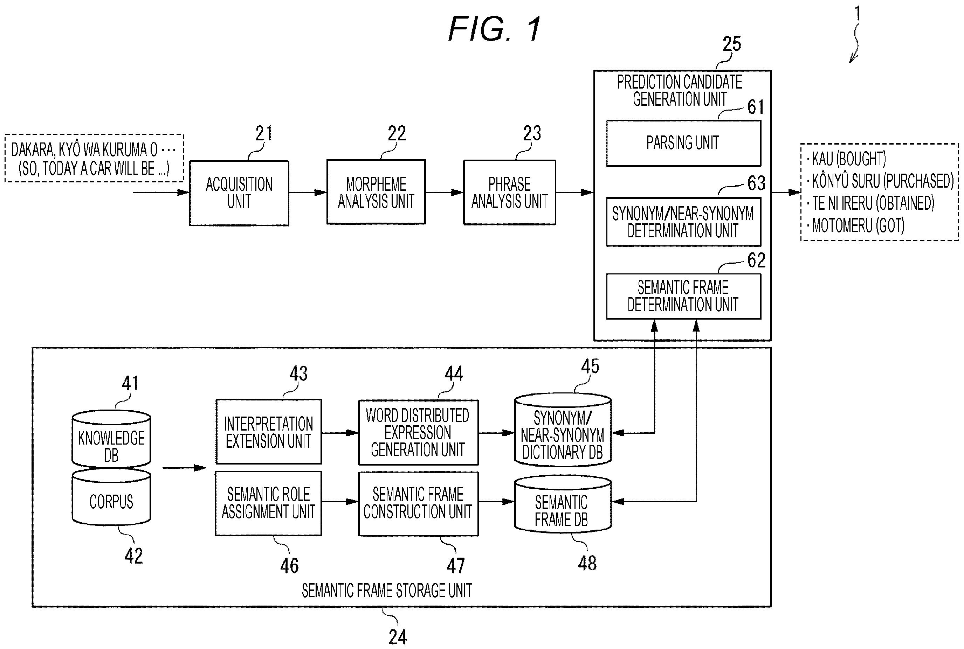

Fig. 1 is a block diagram illustrating a configuration example of a first embodiment of an information processing apparatus to which the present technology is applied.

An information processing apparatus 1 of Fig. 1 is an apparatus that executes processing of predicting a character string to be input next from an input character string, and outputting a predicted result as an input character prediction candidate. For example, a character string input by a user through sentence generation software, a browser, or the like is input to the information processing apparatus 1.

For example, when a character string "DAKARA, KYÔ WA KURUMA 0 (So, today a car will be)" is input, the information processing apparatus 1 outputs one or more character strings (words or clauses) such as "KÔNYÛ SURU (purchased)", "KAU (bought)", or "TE NI IRERU (obtained)" as an input character prediction candidate.

The information processing apparatus 1 includes an acquisition unit 21, a morpheme analysis unit 22, a phrase analysis unit 23, a semantic frame storage unit 24, and a prediction candidate generation unit 25.

The acquisition unit 21 acquires a character string (input character string) supplied from the outside (another apparatus), and supplies the character string to the morpheme analysis unit 22.

The morpheme analysis unit 22 performs morpheme analysis on the input character string supplied from the acquisition unit 21, divides the input character string into morphemes, and supplies the morphemes to the phrase analysis unit 23. For example, in a case where the character string "DAKARA, KYÔ WA KURUMA 0 (So, today a car will be)" described above is supplied as the input character string, the character string is divided as "DAKARA/,/KYÔ/WA/KURUMA/O/ (So/,/today/a car/will be/)" ("/" represents a break between morphemes).

The phrase analysis unit 23 performs analysis of a part of speech and conjugation, classification between independent words and attached words, and the like on the input character string subjected to the morpheme analysis, divides the input character string into clauses (phrases) each of which is a minimum meaningful group, and supplies the clauses to the prediction candidate generation unit 25. For example, in a case where "DAKARA/,/KYÔ/WA/KURUMA/O/(So/,/today/a car/will be/)" ("/" represents a break between morphemes) described above is supplied from the morpheme analysis unit 22, the phrase analysis unit 23 divides "DAKARA/,/KYÔ/WA/KURUMA/O/(So/,/today/a car/will be/)" as "DAKARA,/KYÔ WA/KURUMA 0/ (So,/today/a car will be/)" ("/" represents a break between clauses), and supplies "DAKARA,/KYÔ WA/KURUMA 0/ (So,/today/a car will be/)" to the prediction candidate generation unit 25.

The semantic frame storage unit 24 holds a semantic frame DB 48 storing one or more semantic frames, and a synonym/near-synonym dictionary DB 45 storing a synonym or a near-synonym for one or more words.

### <Semantic Frame>

Here, the semantic frame held by the semantic frame storage unit 24 will be described.

The semantic frame is a data set in which words (terms) used when a predetermined concept is verbalized are collected.

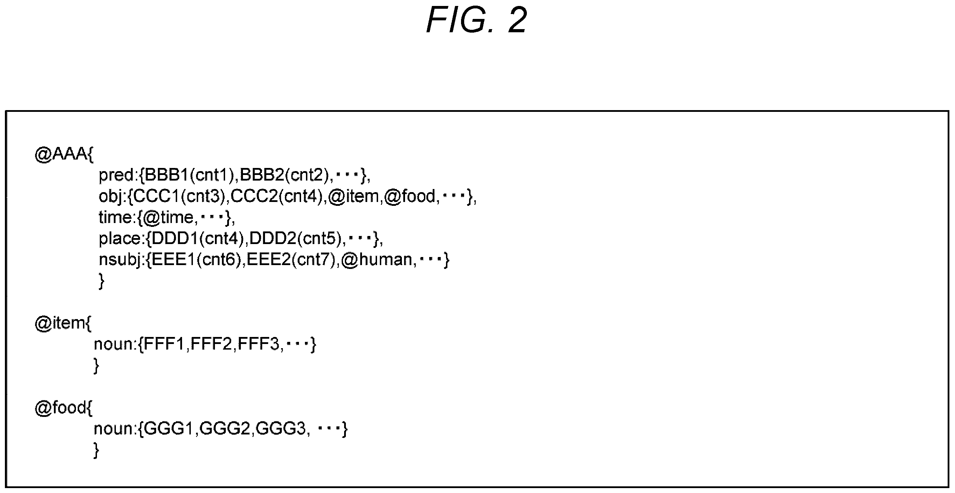

Fig. 2 illustrates an example of a data structure of the semantic frame.

For example, as illustrated in Fig. 2, the semantic frame has a data structure such as @AAA {pred: {BBB1 (cnt1), BBB2 (cnt2), ...}, obj: {CCC1 (cnt3), CCC2 (cnt4), @item, @food, ...}, time: {@time, ...}, place: {DDD1 (cnt4)), DDD2 (cnt5), ...}, nsubj: {EEE1 (cnt6), EEE2 (cnt7), @human, ...}}.

"AAA" following @ at a head is a word indicating a concept of this semantic frame.

The semantic frame includes a predicate pred and one or more words or phrases, and the words or the phrases are classified according to relationships with the predicate pred or roles of the words or the phrases into any one of the following cases: object (obj), time (time), place (place), nominative (nsubj), instrumental (ins), source (src), objective (goal), or experiencer (exp). When a group of the words or the phrases classified according to the cases is called an argument, the semantic frame includes the predicate pred and one or more of arguments obj, time, place, nsubj, ins, src, goal, and exp. Note that the semantic frame does not necessarily include all of the arguments, and is only required to include one or more of any one of the arguments or the predicate. In the example of Fig. 2, the arguments ins, src, goal, and exp are omitted.

In the predicate pred, a word as a verb (verb phrase) or a noun (noun phrase) indicating the concept of the semantic frame is stored together with priority information cnt representing priority of the word. "BBB1" and "BBB2" each correspond to the word indicating the concept of the semantic frame, and cnt1 represents priority information of the word "BBB1", and cnt2 represents priority information of the word "BBB2". As the priority information cnt of the word, the number of times the word is used in sentences (appearance frequency) or a probability calculated from the number of times the word is used in sentences (appearance probability) can be used. Alternatively, a user defining the semantic frame may determine an optional value as the priority information cnt. The same applies to priority information of each argument described below.

In the argument obj, a word (mainly a noun (noun phrase)) used in the sentence as an object for the predicate of the semantic frame is stored together with the priority information cnt indicating the priority of the word. "CCC1" and "CCC2" each correspond to the word used in the sentence as the object for the word in the predicate pred, and cnt3 represents priority information of the word "CCC1", and cnt4 represents priority information of the word "CCC2". The next word with "@" added at a head represents a reference word group separately stored, and @item or @food represents that the reference word group separately stored is to be inserted. In the example of Fig. 2, it is meant that words "FFF1", "FFF2", and "FFF3" stored in @item and words "GGG1", "GGG2", and "GGG3" stored in @food{} are stored in the argument obj.

In the argument time, a word (mainly a noun (noun phrase)) used in the sentence as a term representing a time for the predicate of the semantic frame is stored together with the priority information cnt indicating the priority of the word. In the example of Fig. 2, a reference word group @time separately stored is inserted.

In the argument place, a word (mainly a noun (noun phrase)) used in the sentence as a term representing a place for the predicate of the semantic frame is stored together with the priority information cnt indicating the priority of the word. "DDD1" and "DDD2" each correspond to the word used in the sentence as the term representing a place for the words in the predicate pred, and cnt4 represents priority information of the word "DDD1", and cnt5 represents priority information of the word "DDD2".

In the argument nsubj, a word (mainly a noun (noun phrase)) used in the sentence as a term representing a subject for the predicate of the semantic frame is stored together with the priority information cnt indicating the priority of the word. "EEE1" and "EEE2" each correspond to the word used in the sentence as the term representing a subject for the words in the predicate pred, and cnt6 represents priority information of the word "EEE1", and cnt7 represents priority information of the word "EEE2". Furthermore, a reference word group @human stored separately as the term representing a subject for the word in the predicate pred is inserted.

As described above, in the arguments obj, time, place, and nsubj, a word can be stored as it is, and in addition, a word can be specified by referring to the reference word group separately stored, such as the reference word group @item or the reference word group @food.

The arguments ins, src, goal, and exp, which are omitted in the example of Fig. 2, are described in a similar manner.

In the argument ins, a word (mainly a noun (noun phrase)) representing an instrument that enables an operation represented by the predicate of the semantic frame, for example, "HANMÂ DE (with a hammer)" in "KARE WA HANMÂ DE TOBIRA 0 KOWASITA. (He broke the door with a hammer.)", is stored together with the priority information cnt representing the priority of the word.

In the argument src, a word (mainly a noun (noun phrase)) representing a starting point of change caused by the predicate of the semantic frame, for example, "RONDON KARA (from London)" in "KARE WA RONDON KARA PARI E IDÔ SITA. (He moved from London to Paris.)", is stored together with the priority information cnt representing the priority of the word.

In the argument goal, a word (mainly a noun (noun phrase)) representing an end point of change caused by the predicate of the semantic frame, for example, "PARI HE (to Paris)" in "KARE WA RONDON KARA PARI E IDÔ SITA. (He moved from London to Paris.)", is stored together with the priority information cnt representing the priority of the word.

In the argument exp, a word (mainly a noun (noun phrase)) representing a subject who experiences a (psychological) state expressed by the predicate of the semantic frame, for example, "KARE GA (He)" in "KARE GA TARÔ NO SE GA TAKAI TO OMOTTE ITA. (He thought Taro was tall.)" or "KARE NI (He)" in "KARE NI KOMONZYO GA YOMERU. (Can he read old documents?)", is stored together with the priority information cnt representing the priority of the word. Also in the arguments ins, src, goal, and exp, a word can be specified by referring to the reference word group separately stored.

The priority information cnt assigned to each of the words stored in the predicate pred and the arguments obj, time, place, nsubj, ins, src, goal, and exp functions as a score when the semantic frame including the input character prediction candidate is retrieved. The priority information cnt is not always necessary, and is omitted in some cases.

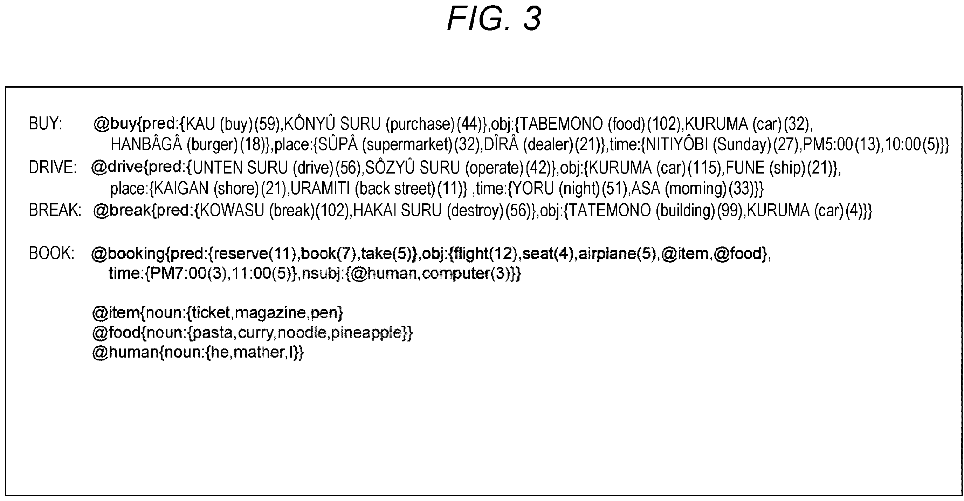

Fig. 3 illustrates examples of a semantic frame @buy of a concept "buy", a semantic frame @drive of a concept "drive", a semantic frame @break of a concept "break", and a semantic frame @booking of a concept "book", and examples of the reference word groups @item, @food, and @human.

Note that, in the present embodiment, the examples are shown in which the number of times the predicate or the word corresponding to the argument is used in sentences is used as the priority information cnt of the word.

The semantic frame @buy of the concept "buy" includes "KAU (buy)" and "KÔNYÛ SURU (purchase)" as predicates preds of the concept "buy", and "59 (times)" which is the number of times the word is used in sentences is assigned as priority information of the word "KAU (buy)", and "44 (times)" which is the number of times the word is used in sentences is assigned as priority information of the word "KÔNYÛ SURU (purchase)".

Furthermore, in the semantic frame @buy of the concept "buy", as objects of the concept "buy", a word "TABEMONO (food)" and its priority information "102", a word "KURUMA (car)" and its priority information "32", and a word "HANBÂGÂ (burger)" and its priority information "18" are stored. A word "DÎRÂ (dealer)" and its priority information "21", and a word "SÛPÂ (supermarket)" and its priority information "32" are stored as terms representing a place of the concept "buy".

A language of the semantic frame is not limited to Japanese, and may be a foreign language such as English or Chinese.

The semantic frame @booking of the concept "book" includes "reserve", "book", and "take" as predicates preds of the concept "book", and the priority information of "11" is stored in the word "reserve", the priority information of "7" is stored in the word "book", and the priority information of "5" is stored in the word "take".

Furthermore, as objects of the concept "book", a word "flight" and its priority information "12", a word "seat" and its priority information "4", and a word "airplane" and its priority information "5" are stored. The reference word groups @item and @food are stored as the objects of the concept "book".

As terms representing a place of a time of the concept "book", a word "PM 7:00" and its priority information "3", and a word "11:00" and its priority information "5" are stored. As terms representing a subject of the concept "book", the reference word group @human, and a word "computer" and its priority information "3" are stored.

In the reference word group @item, words "ticket", "magazine", and "pen" are stored. In the reference word group @food, words "pasta", "curry", "noodle", and "pineapple" are stored. In the reference word group @human, words "he", "mather", and "I" are stored.

Note that the words stored in the predicate pred are verbs in the example of Fig. 3. However, as described above, the words stored in the predicate pred are nouns (noun phrases) in some cases.

Returning to the description of Fig. 1, the semantic frame storage unit 24 includes a knowledge DB 41, a corpus 42, an interpretation extension unit 43, a word distributed expression generation unit 44, the synonym/near-synonym dictionary DB 45, a semantic role assignment unit 46, a semantic frame construction unit 47, and the semantic frame DB 48. The semantic frame described with reference to Fig. 2 is stored in the semantic frame DB 48.

In the knowledge DB 41, a manually generated semantic frame (semantic frame set) and data manually generated by collecting synonyms and near-synonyms (synonym/near-synonym data set) are stored. The semantic frame stored in the knowledge DB 41 include less information than the semantic frame stored in the semantic frame DB 48 described with reference to Fig. 2. For example, the semantic frame stored in the knowledge DB 41 does not include priority information of a word stored in a predicate or an argument. Furthermore, the number of words stored in the predicate or the argument is small in some cases.

Furthermore, for example, a resource made available for use by a third party, such as FrameNet (https://framenet.icsi.berkeley.edu/fndrupal/), can also be used for the knowledge DB 41, in addition to the semantic frame, synonyms, and near-synonyms generated manually and exclusively.

The corpus 42 is document data in which sentences (text data) as specific examples of the semantic frame are collected. The corpus 42 can be generated by, for example, collecting a large number of sentences from newspaper articles, websites, or the like.

For the large number of sentences accumulated in the corpus 42, the interpretation extension unit 43 generates a plurality of sentences from one sentence using two extension methods, and supplies the sentences to the word distributed expression generation unit 44. The two extension methods are grammatical extension and lexical extension.

The grammatical extension will be described.

In the grammatical extension, the interpretation extension unit 43 parses one sentence, and generates a sentence including grammatically legitimate substrings on the basis of a result of the parsing. The result of the parsing can be represented by a tree structure with a predicate as a root. By extraction of a subtree from the tree structure using a rule, a high-quality sentence containing no grammatical errors can be generated. By generation of a large number of sentences containing no grammatical errors, a difference in a grammatical expression can be accurately expressed as a vector when a distributed expression of a word is generated.

A specific example will be described. For example, the interpretation extension unit 43 deletes some clauses from one sentence "KYÔ KARE WA SUMÂTOHWON 0 KATTA. (Today, he bought a smartphone.)" or changes the word order in the sentence to generate a plurality of sentences, such as "KATTA (Bought)", "KYÔ KATTA (Bought today)", "KARE WA KATTA (He bought)", "SUMÂTOHWON 0 KATTA (Bought a smartphone)", "KYÔ SUMÂTOHWON 0 KATTA (Bought a smartphone today)", "KYÔ KARE WA KATTA (He bought today)", "KARE WA SUMÂTOHWON 0 KYÔ KATTA (He bought a smartphone today)", "SUMÂTOHWON 0 KYÔ KARE WA KATTA (He bought, today, a smartphone)", ....

The lexical extension will be described.

In the lexical extension, a plurality of semantically similar sentences is generated from one sentence by replacement of words whose meanings do not change greatly even if they are replaced using the semantic frame set or the synonym/near-synonym data set stored in the knowledge DB 41. By considering a relationship between the words (phrases) defined in the semantic frame set, as well as in the synonym/near-synonym data set of the knowledge DB 41, one sentence can be extended into a large number of sentences without breaking an original meaning of the sentence. Since the number of sentences in which a specific word appears can be increased by performing semantic vocabulary extension, it is possible to comprehensively collect usage of the specific word.

A specific example will be described. For example, the interpretation extension unit 43 generates, from the sentence "KYÔ KARE WA SUMÂTOHWON 0 KATTA. (Today, he bought a smartphone.)", sentences such as "KYÔ KANOZYO WA SUMÂTOHWON 0 KATTA. (Today, she bought a smartphone.)", "KYÔ KARE WA KEITAIDENWA 0 KATTA. (Today, he bought a cell phone.)", "KYÔ KARE WA PASOKON 0 KATTA. (Today, he bought a personal computer.)", and "KYÔ KARE WA SUMÂTOHWON 0 KÔNYÛ SITA. (Today, he purchased a smartphone.)". These example sentences are generated on the basis of data in the knowledge DB 41 such that "KARE (he)" and "KYÔ KANOZYO (she)" are near-synonyms, and "SUMÂTOHWON (smartphone)", "PASOKON (personal computer)", and "KEITAIDENWA (cell phone)" are near-synonyms, for example.

By simultaneous application of the above two extension methods, i.e., the grammatical extension and the lexical extension, it is possible to generate a distributed expression of a word, which is grammatically and lexically robust.

The word distributed expression generation unit 44 generates, using a large number of sentences generated and supplied by the interpretation extension unit 43, a distributed expression of a word for each word included in the large number of sentences. The distributed expression of a word is a method for estimating a semantic similarity relationship (similarity) between words, and arranging each word in a vector space of a predetermined number of dimensions so that words having similar meanings become similar vectors, and the method is also called word2vec. The distributed expression of a word is disclosed in, for example, "Tomas Mikolov, Ilya Sutskever, Kai Chen, Greg Corrado, and Jeffrey Dean, "Distributed Representations of Words and Phrases and their Compositionality," In Proceedings of the 27th Annual Conference on Neural Information Processing Systems (NIPS2013), pp.3111-3119, 2013".

The word distributed expression generation unit 44 groups, for all the words represented by the distributed expressions (vectors), words having similar meanings (including synonyms) by using cosine distances of the vectors or the like, and stores the groups of the words in the synonym/near-synonym dictionary DB 45.

The synonym/near-synonym dictionary DB 45 is a dictionary database that stores a synonym or a near-synonym of each of a large number of words. Note that, in the synonym/near-synonym dictionary DB 45, each word needs not be stored in a distributed expression (vector expression), and a data format in which the word is stored is optional. Moreover, a method for generating a synonym or a near-synonym is not limited to a method using a distributed expression of a word, and an optional method can be adopted.

The semantic role assignment unit 46 generates a semantic frame from each of the large number of sentences (text data) in the corpus 42. In a case where the same semantic frame is already stored in the knowledge DB 41, the semantic frame stored in the knowledge DB 41 is changed. With this arrangement, the semantic frame stored in the knowledge DB 41 is enhanced.

Specifically, the semantic role assignment unit 46 performs morpheme analysis similar to that performed by the morpheme analysis unit 22, clause division similar to that performed by the phrase analysis unit 23, and parsing on each sentence in the corpus 42, thereby identifying a semantic role of each word and generating a semantic frame in which the semantic role is assigned to the word. Note that no score is generated at this point. At this point, for example, for a sentence "SÛPÂ DE TABEMONO WO KAU (I will buy food at a supermarket)", a semantic frame @buy {pred: {KAU (buy)}, obj: {TABEMONO (food)}, place: {SÛPÂ (supermarket)}} of the concept "buy" is generated, and for a sentence "DÎRÂ DE KURUMA WO KÔNYÛ SURU (I will purchase a car at a dealer)", a semantic frame @buy {pred: {KÔNYÛ SURU (purchase)}, obj: {KURUMA (car)}, place: {DÎRÂ (dealer)}} of the concept "buy" is generated.

The semantic frame construction unit 47 aggregates a large number of semantic frames supplied from the semantic role assignment unit 46, and assigns scores to a predicate and an argument of each semantic frame. The semantic frames to which the scores are assigned are stored in the semantic frame DB 48 in a format as illustrated in Fig. 2. Thus, the score of the semantic frame represents how likely (easy to use) each word corresponding to a predicate or an argument is to appear.

Using the synonym/near-synonym dictionary DB 45 and the semantic frame DB 48 of the semantic frame storage unit 24, the prediction candidate generation unit 25 generates a candidate for a character string predicted to be input next to the input character string for each clause supplied from the phrase analysis unit 23, and outputs the generated candidate as an input character prediction candidate.

The prediction candidate generation unit 25 includes a parsing unit 61, a semantic frame determination unit 62, and a synonym/near-synonym determination unit 63.

The parsing unit 61 parses the input character string for each clause supplied from the phrase analysis unit 23, and identifies a semantic role or the like of each clause or each word from a dependency relationship, case information such as a main case or an object case, and the like of each clause or each word constituting the input character string.

For example, for the input character string "DAKARA,/KYÔ WA/KURUMA 0/ (So,/today/a car will be/)" supplied from the phrase analysis unit 23, the parsing unit 61 identifies that "KYÔ (today)" in "KYÔ WA (today)" is a word used in the sentence as a term representing a time, that is, a word used as a word belonging to the argument time, and "KURUMA (car)" in "KURUMA 0 (a car will be)" is a word used in the sentence as an object, that is, a word used as a word belonging to the argument obj.

Next, on the basis of a parsing result of the parsing unit 61, the semantic frame determination unit 62 searches the semantic frame DB 48 for a semantic frame corresponding to the input character string supplied from the phrase analysis unit 23 and determines the semantic frame.

Specifically, for the input character string "DAKARA,/KYÔ WA/KURUMA 0/ (So,/today/a car will be/)" supplied from the phrase analysis unit 23, as described above, the semantic frame having the word "today" belonging to the argument time and the word "car " belonging to the argument obj is retrieved from the semantic frame DB 48. In the retrieval of the semantic frame, the scores of the predicate pred and each of the arguments obj, time, place, nsubj, ins, src, goal, and exp of the semantic frame are considered.

For example, in a case where the input character string is "NITIYÔBI NI/DÎRÂ NI/KURUMA 0/ (On Sunday,/to a dealer,/a car/)", according to the example of Fig. 3, a score of the semantic frame @buy of the concept "buy" is 27 (Sunday) + 21 (dealer) + 32 (car) = 80.

For example, in a case where the input character string is "YORU/KAIGAN O/KURUMA DE/ (At night,/along the shore,/a car/)", according to the example of Fig. 3, a score of the semantic frame @drive of the concept "drive" is 51 (night) + 21 (shore) + 115 (car) = 187.

As described above, all the semantic frames stored in the semantic frame DB 48 are retrieved for the input character string, and a semantic frame having a highest score is determined as a semantic frame including a candidate for a character string predicted to be input next to the input character string.

It is assumed that, for example, the semantic frame @buy of the concept "buy" is detected as the semantic frame having the highest score for the input character string "DAKARA,/KYÔ WA/KURUMA 0/ (So,/today/a car will be/)" supplied from the phrase analysis unit 23. As a result, the words "KAU (bought)" and "KÔNYÛ SURU (purchased)" belonging to the predicate pred of the determined semantic frame @buy are determined as part of the input character prediction candidate.

The synonym/near-synonym determination unit 63 searches the synonym/near-synonym dictionary DB 45 for a synonym or a near-synonym of the word belonging to the predicate pred of the semantic frame determined by the semantic frame determination unit 62, and determines the synonym or the near-synonym. For example, in the example described above, in a case where "KAU (bought)" and "KÔNYÛ SURU (purchased)" belonging to the predicate pred of the semantic frame @buy of the concept "buy" are determined in the semantic frame determination unit 62, "TE NI IRERU (obtained)" and "MOTOMERU (got)" are detected as synonyms or near-synonyms of "KAU (bought)" and "KÔNYÛ SURU (purchased)" from the synonym/near-synonym dictionary DB 45.

As a result of execution of the parsing unit 61, the semantic frame determination unit 62, and the synonym/near-synonym determination unit 63, the prediction candidate generation unit 25 outputs four words including "KAU (bought)" and "KÔNYÛ SURU (purchased)" retrieved from the semantic frame DB 48 and "TE NI IRERU (obtained)" and "MOTOMERU (got)" retrieved from the synonym/near-synonym dictionary DB 45 and serving as synonyms or synonyms of "KAU (bought)" and "KÔNYÛ SURU (purchased)", as the input character prediction candidates to be input next to the input character string "DAKARA, KYÔ WA KURUMA 0 (So, today a car will be)".

The information processing apparatus 1 is configured as described above.

Note that, although the information processing apparatus 1 includes the semantic frame storage unit 24 in the configuration example illustrated in Fig. 1, the semantic frame storage unit 24 may be provided in another device such as a cloud server, and the prediction candidate generation unit 25 may retrieve desired data by accessing the synonym/near-synonym dictionary DB 45 and the semantic frame DB 48 via a network. Furthermore, for the semantic frame storage unit 24, the information processing apparatus 1 may include only the synonym/near-synonym dictionary DB 45 and the semantic frame DB 48.

### <Input Character Prediction Candidate Generation Processing>

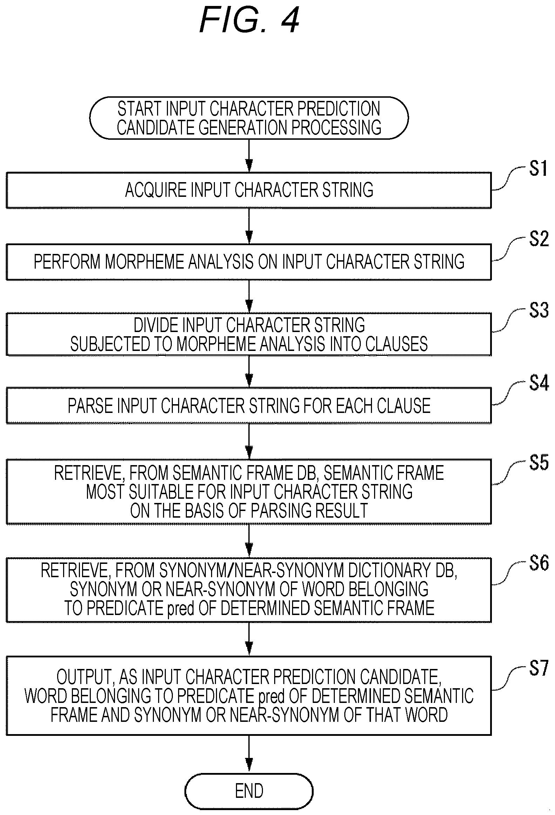

Next, input character prediction candidate generation processing by the information processing apparatus 1 according to the first embodiment will be described with reference to a flowchart of Fig. 4.

First, in step S1, the acquisition unit 21 acquires a character string input from another apparatus, and supplies the acquired character string to the morpheme analysis unit 22.

In step S2, the morpheme analysis unit 22 performs morpheme analysis on the input character string supplied from the acquisition unit 21, divides the input character string into morphemes, and supplies the morphemes to the phrase analysis unit 23.

In step S3, the phrase analysis unit 23 performs analysis of a part of speech and conjugation, classification between independent words and attached words, and the like on the input character string subjected to the morpheme analysis, divides the input character string into clauses each of which is a minimum meaningful group, and supplies the clauses to the prediction candidate generation unit 25.

In step S4, the parsing unit 61 of the prediction candidate generation unit 25 parses the input character string for each clause supplied from the phrase analysis unit 23, and identifies a semantic role or the like of each clause or each word.

In step S5, the semantic frame determination unit 62 retrieves (detects), from the semantic frame DB 48, a semantic frame most suitable for the input character string supplied from the phrase analysis unit 23, on the basis of a parsing result of the parsing unit 61. Specifically, as described above, a semantic frame having a highest score for the input character string is retrieved (detected) as a semantic frame including a candidate for a character string predicted to be input next to the input character string.

In step S6, the synonym/near-synonym determination unit 63 retrieves (detects), from the synonym/near-synonym dictionary DB 45, a synonym or a near-synonym of a word belonging to a predicate pred of the semantic frame determined by the semantic frame determination unit 62.

In step S7, the prediction candidate generation unit 25 outputs, as an input character prediction candidate, the word belonging to the predicate pred of the semantic frame determined by the semantic frame DB 48 and the synonym or the near-synonym of the word.

As described above, the input character prediction candidate generation processing is executed.

### <Generation Processing of Semantic Frame DB and Synonym/Near-synonym Dictionary DB>

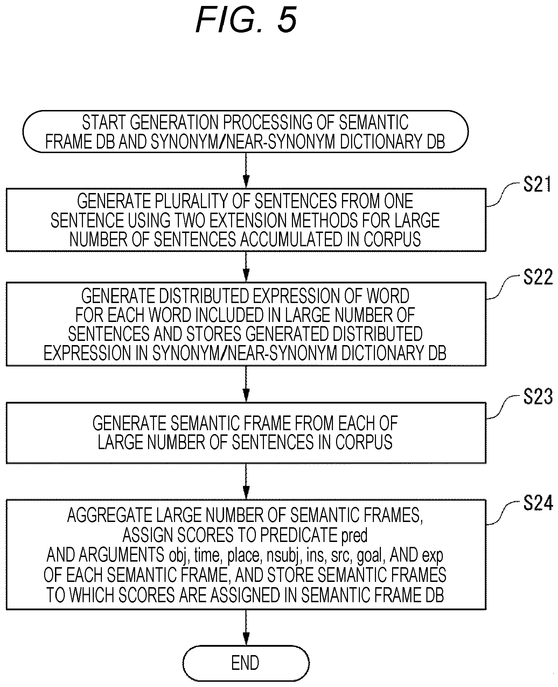

Next, generation processing of the semantic frame DB 48 and the synonym/near-synonym dictionary DB 45 by the information processing apparatus 1 will be described with reference to a flowchart of Fig. 5.

First, in step S21, the interpretation extension unit 43 generates a plurality of sentences from one sentence using two extension methods for a large number of sentences accumulated in the corpus 42, and supplies the sentences to the word distributed expression generation unit 44.

In step S22, the word distributed expression generation unit 44 generates a distributed expression of a word for each word included in the large number of sentences supplied by the interpretation extension unit 43, and stores the generated distributed expression in the synonym/near-synonym dictionary DB 45.

In step S23, the semantic role assignment unit 46 generates a semantic frame from each of the large number of sentences in the corpus 42. The generated semantic frame is supplied to the semantic frame construction unit 47.

In step S24, the semantic frame construction unit 47 aggregates a large number of semantic frames supplied from the semantic role assignment unit 46, assigns scores to a predicate pred and arguments obj, time, place, nsubj, ins, src, goal, and exp of each semantic frame, and stores the semantic frames to which the scores are assigned in the semantic frame DB 48.

As described above, the generation processing of the semantic frame DB 48 and the synonym/near-synonym dictionary DB 45 is executed.

The processing of steps S21 and S22 for generating the synonym/near-synonym dictionary DB 45 and the processing of steps S23 and S24 for generating the semantic frame DB 48 may be executed in parallel or in a reverse order. Furthermore, the processing of steps S21 and S22 and the processing of steps S23 and S24 may be individually executed at different timings.

The generation processing of the synonym/near-synonym dictionary DB 45 and the generation processing of the semantic frame DB48 can be periodically executed at optional timings to update information in the databases, but the synonym/near-synonym dictionary DB 45 and the semantic frame DB 48 are only required to be prepared before the input character prediction candidate generation processing is executed by the information processing apparatus 1.

According to the input character prediction candidate generation processing described above, the information processing apparatus 1 determines a prediction candidate of the input character string using the semantic frame generated in advance from the corpus 42. Compared with a prediction of the input character string simply using the word of the input character string only, a prediction is made using the semantic frame from a plurality of arguments and semantic roles thereof (for example, an object comes as the next character string), so that prediction accuracy is improved. Furthermore, by using the semantic frame, a prediction can be made also considering a word that does not exist in a sentence of the input character string, so that the prediction accuracy is improved.

That is, according to the information processing apparatus 1, the prediction accuracy when the next input character candidate is predicted and presented can be improved.

Note that, according to the input character prediction candidate generation processing described above, the semantic frame predicted from the input character string is determined, the word belonging to the predicate pred of the semantic frame is output (presented), and the synonym or the near-synonym of the word belonging to the predicate pred is also output (presented). However, the output of the synonym and the near-synonym may be omitted. In other words, the input character prediction candidate generation processing is only required to be capable of outputting at least the word belonging to the predicate pred of the semantic frame.

However, by also outputting the synonym and the near-synonym, paraphrastic expressions can also be presented to the user, and vocabulary of the user can be extended.

For example, in a case where a user is inputting a reply message to a question by e-mail or the like as to whether or not the user has purchased a certain book, when the user tried to input "KATTA (bought)" as an input character prediction candidate following "MÔ SONO HON WA (The book has already been)", the user found "TE NI IREMASITA (obtained)" presented as a synonym or a near-synonym, and selected "TE NI IREMASITA (obtained)". In this way, by also presenting a paraphrastic expression, it is possible to present a term that the user cannot think of.

In the generation processing of the synonym/near-synonym dictionary DB 45, the interpretation extension unit 43 extends interpretation of one sentence by generating two or more sentences from the sentence, and generates the distributed expression of the word by using all the sentences, thereby improving a quality of the distributed expression.

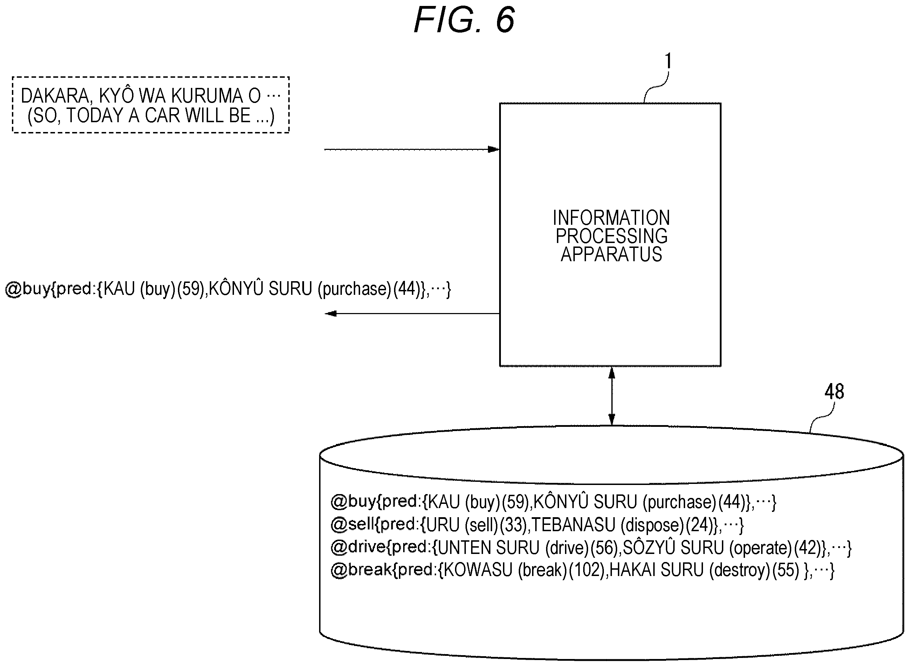

Note that, in the example described above, the semantic frame predicted from the input character string is determined, and the word belonging to the predicate pred of the semantic frame is output (presented). However, as illustrated in Fig. 6, the information processing apparatus 1 may output the semantic frame itself on the basis of the input character string.

In an example of Fig. 6, for the input character string "DAKARA, KYÔ WA KURUMA 0 (So, today a car will be)", the information processing apparatus 1 determines and outputs the semantic frame @buy of the concept "buy" from the semantic frame @buy of the concept "buy", the semantic frame @sell of the concept "sell", the semantic frame @drive of the concept "drive", the semantic frame @break of the concept "break", and the like.

Also in this case, the semantic frame includes the word belonging to the predicate pred, which is to be output, and a score thereof. Therefore, the apparatus that has acquired the semantic frame can present, as a prediction candidate of the input character string, the word belonging to the predicate pred in priority based on the score.

### <2. Second Embodiment>

### <Block Diagram of Information Processing Apparatus>

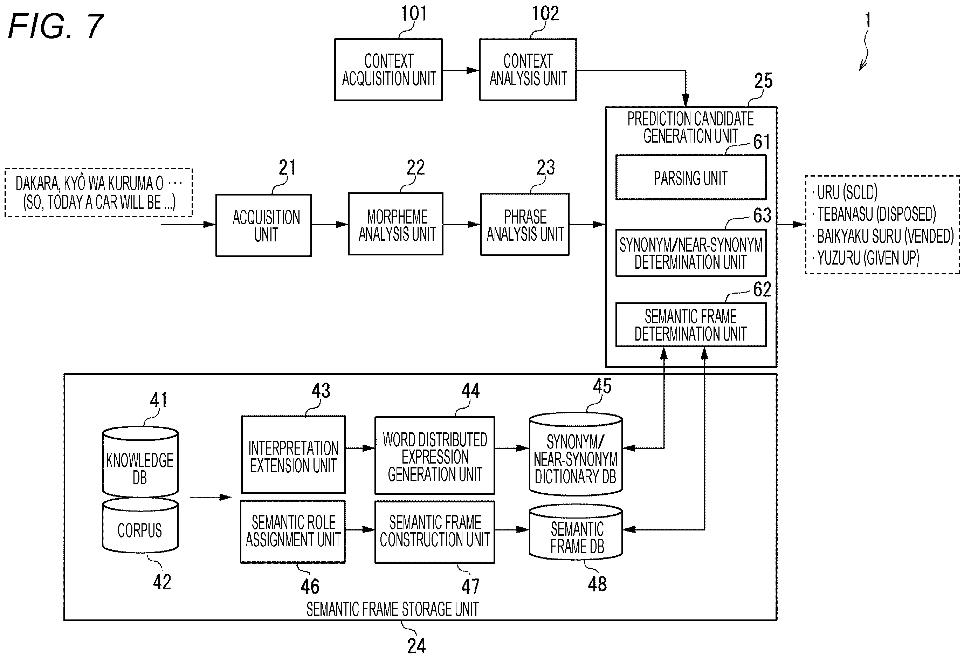

Fig. 7 is a block diagram illustrating a configuration example of a second embodiment of an information processing apparatus to which the present technology is applied.

In Fig. 7, parts corresponding to those of the first embodiment described above are denoted by the same reference numerals, and description thereof is omitted.

Comparing an information processing apparatus 1 according to the second embodiment of Fig. 7 with the information processing apparatus 1 according to the first embodiment of Fig. 1, a context acquisition unit 101 and a context analysis unit 102 are newly added in the second embodiment.

The context acquisition unit 101 acquires a situation related to a user inputting a character (context information), and supplies the situation to the context analysis unit 102.

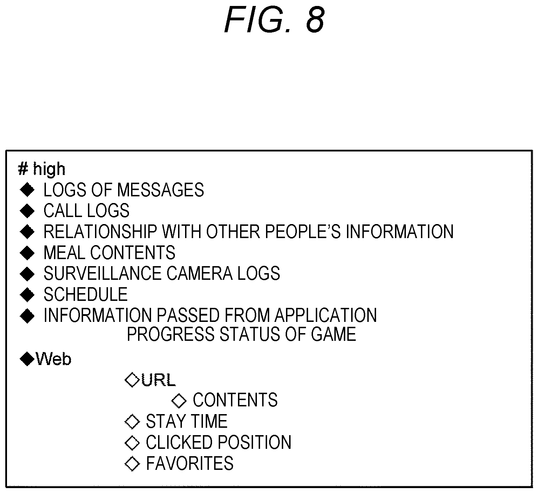

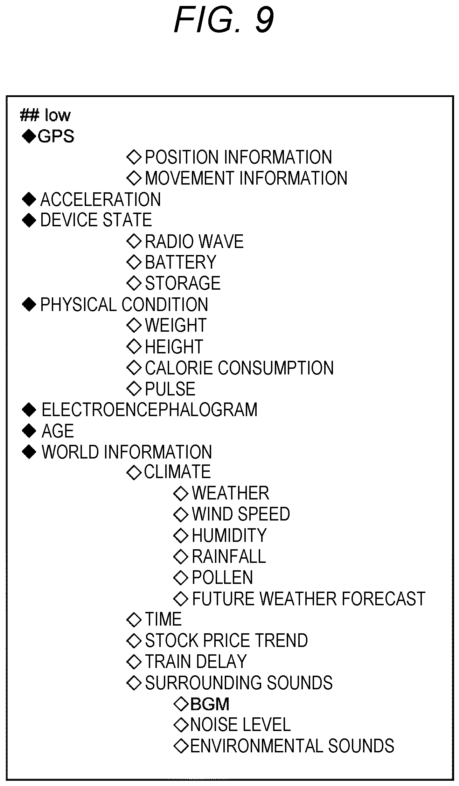

Figs. 8 and 9 each illustrate an example of an event (modal) that can be acquired as the situation related to the user (context information).

Fig. 8 is an example of context information that can be acquired from various applications.

As illustrated in Fig. 8, for example, it is possible to acquire, as the context information, logs of messages exchanged via social networking service (SNS) and the like, call logs, a relationship with other people's information, user's meal contents, surveillance camera logs, a user's schedule, information passed from an application used by the user (for example, a progress status of a game), information associated with Web information accessed by the user (a URL, contents, a stay time, a clicked position, information registered as favorites, and the like), and the like.

Fig. 9 is an example of context information that can be acquired from various sensors.

As illustrated in Fig. 9, for example, it is possible to acquire, as the context information, position information and movement information of GPS, which can be acquired from a smartphone or the like, acceleration, device states (a radio wave state, a battery state, and a storage using situation), a physical condition (a weight, extension, calorie consumption, and a pulse), electroencephalogram, age, world information (climate (weather, a wind speed, humidity, rainfall, pollen, and a future weather forecast)), time, a stock price trend, a train delay, information associated with surrounding sounds (BGM, a noise level, environmental sounds), and the like.

Returning to Fig. 7, the context analysis unit 102 analyzes the situation related to the user (context information) supplied from the context acquisition unit 101, determines a semantic frame highly related to the analyzed situation of the user (hereinafter referred to as a related semantic frame), and supplies the related semantic frame to a prediction candidate generation unit 25. When a semantic frame determination unit 62 of the prediction candidate generation unit 25 determines a semantic frame, priority of the semantic frame to be retrieved changes depending on the related semantic frame supplied from the context analysis unit 102. As a result, the semantic frame determined by the semantic frame determination unit 62 can be different between a case where there is an output from the context analysis unit 102 and a case where there is no output from the context analysis unit 102.

Description will be made with a specific example. For example, it is assumed that access information indicating that a user accessed a website for purchasing a used car, GPS position information (movement information) indicating that the user went to a purchase shop for purchasing a car, call information indicating that the user made a call to the purchase shop, and the like are supplied from the context acquisition unit 101 to the context analysis unit 102.

The context analysis unit 102 determines a semantic frame @sell of a concept "sell" as a related semantic frame highly related to a situation of the user, on the basis of information indicating an action history of the user (the access information, the GPS position information, and the call information) supplied from the context acquisition unit 101, and supplies the semantic frame @sell to the prediction candidate generation unit 25.

As a method for determining the related semantic frame highly related to the situation of the user by the context analysis unit 102, for example, it is possible to determine and output the related semantic frame as a context analysis result by holding, in advance, a table in which information such as URL information or GPS information is associated with the related semantic frame to be output as the context analysis result depending on contents of a website, a type of a store existing at a place of a GPS position, or the like, and by referring to the table.

Note that the context acquisition unit 101 and the context analysis unit 102 may be provided as external devices, and the context analysis result may be supplied to the prediction candidate generation unit 25 of the information processing apparatus 1.

The semantic frame determination unit 62 of the prediction candidate generation unit 25 determines the semantic frame @sell of the concept "sell" as the input character prediction candidate, also considering the analysis result of the context analysis unit 102.

Specifically, as in the first embodiment, the semantic frame determination unit 62 first retrieves all semantic frames stored in a semantic frame DB 48 for an input character string, and determines a predetermined number of semantic frames having high scores.

Next, the semantic frame determination unit 62 adds a predetermined score (for example, 20) to a score of the related semantic frame supplied as the context analysis result from the context analysis unit 102. Then, the semantic frame determination unit 62 determines a semantic frame having a highest score after the addition of the score based on the context analysis result as a semantic frame including a candidate for a character string predicted to be input next to the input character string.

As described above, the semantic frame determination unit 62 determines a semantic frame most suitable for the input character string on the basis of a result of adjusting, on the basis of the analysis result of the context analysis unit 102, priority (increasing priority) of a predetermined semantic frame stored in the semantic frame DB 48.

Note that a method for setting the priority of the semantic frame on the basis of the analysis result of the context analysis unit 102 is not limited to this. For example, in a case where the semantic frame supplied from the context analysis unit 102 exists in a predetermined number of semantic frames having higher scores for the input character string, the semantic frame supplied from the context analysis unit 102 may be determined as it is as the semantic frame including the input character prediction candidate most suitable for the input character string.

### <Input Character Prediction Candidate Generation Processing>

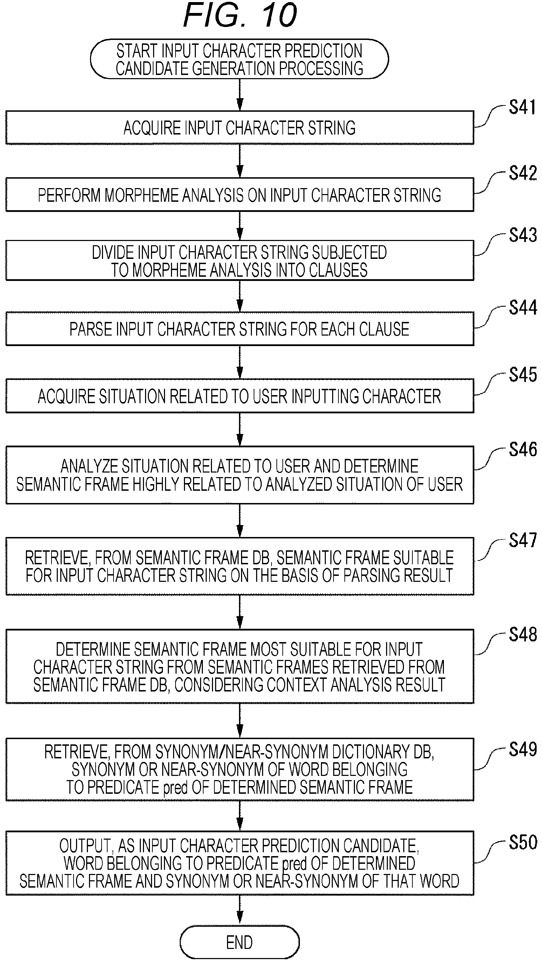

Next, input character prediction candidate generation processing by the information processing apparatus 1 according to the second embodiment will be described with reference to a flowchart of Fig. 10.

Since processing in steps S41 to S44 is similar to the processing in steps S1 to S4 in the first embodiment illustrated in Fig. 4, description thereof will be omitted.

In step S45, the context acquisition unit 101 acquires a situation related to a user inputting a character (context information), and supplies the situation to the context analysis unit 102.

In step S46, the context analysis unit 102 analyzes the situation related to the user supplied from the context acquisition unit 101, determines a semantic frame highly related to the analyzed situation of the user, and supplies the semantic frame to the prediction candidate generation unit 25.

In step S47, the semantic frame determination unit 62 retrieves, from the semantic frame DB 48, a semantic frame suitable for the input character string supplied from the phrase analysis unit 23 on the basis of a parsing result of a parsing unit 61. Here, for example, a semantic frame having a score equal to or higher than a certain value is retrieved, or a predetermined number of semantic frames are retrieved in descending order of scores.

The processing in steps S45 and S46 and the processing in step S47 can be executed in parallel. In other words, the processing in steps S45 and S46 can be executed at any timing, as long as the processing in steps S45 and S46 is completed before the processing in step S48 is started.

In step S48, the semantic frame determination unit 62 determines a semantic frame most suitable for the input character string from one or more semantic frames retrieved from the semantic frame DB 48, considering a context analysis result by the context analysis unit 102. For example, a semantic frame having a highest score after addition of a score based on the context analysis result is determined as a semantic frame including a candidate for a character string predicted to be input next to the input character string.

In step S49, a synonym/near-synonym determination unit 63 retrieves (detects), from a synonym/near-synonym dictionary DB 45, a synonym or a near-synonym of a word belonging to a predicate pred of the semantic frame determined by the semantic frame determination unit 62.

In step S50, the prediction candidate generation unit 25 outputs, as an input character prediction candidate, the word belonging to the predicate pred of the semantic frame determined by the semantic frame DB 48 and the synonym or the near-synonym of the word.

As described above, the input character prediction candidate generation processing is executed.

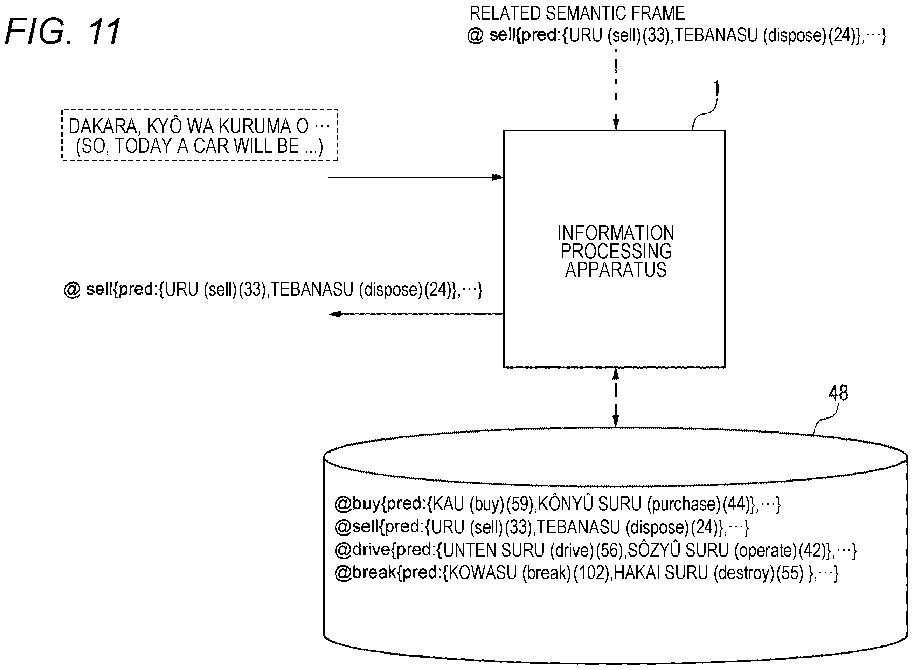

With reference to Fig. 11, a description will be given of a case where the information processing apparatus 1 outputs the semantic frame itself for the input character string in consideration of the situation related to the user.

As described with reference to Fig. 6, for the input character string "DAKARA, KYÔ WA KURUMA 0 (So, today a car will be)", the information processing apparatus 1 according to the first embodiment determines and outputs the semantic frame @buy of the concept "buy" from the semantic frame @buy of the concept "buy", the semantic frame @sell of the concept "sell", the semantic frame @drive of the concept "drive", the semantic frame @break of the concept "break", and the like.

In contrast, in the information processing apparatus 1 according to the second embodiment, it is assumed that the semantic frame @sell of the concept "sell" is supplied from the context analysis unit 102 as a related semantic frame highly related to the situation of the user. In this case, the information processing apparatus 1 determines and outputs the semantic frame @sell of the concept "sell" from a semantic frame @buy of a concept "buy", the semantic frame @sell of the concept "sell", a semantic frame @drive of a concept "drive", a semantic frame @break of a concept "break", and the like. In this way, by considering the situation of the user, the priority of the semantic frame is adjusted, and the semantic frame to be output changes.

In a prediction of the next input character string simply using a word of the input character string only, words "UNTEN SURU (driven)" and "HASIRASERU (run)" are easily displayed as prediction candidates for characters to be input next for an input character string "KURUMA O (a car will be)", while priority of words "URU (sold)" and "KAU (bought)" is low since the user does not frequently buy or sell a car.

However, according to the information processing apparatus 1 according to the second embodiment, since the semantic frame is determined on the basis of a result of analyzing the situation of the user, it is possible to preferentially output the words "URU (sold)" and "KAU (bought)" in accordance with the situation of the user, for the input character string "KURUMA 0 (a car will be)". In other words, it is possible to present an input character prediction candidate more suitable for the situation of the user.

Note that, in the example described above, the priority is adjusted for each semantic frame on the basis of a content analysis result. However, the priority of each word stored in the predicate pred of the semantic frame may be adjusted on the basis of the content analysis result.

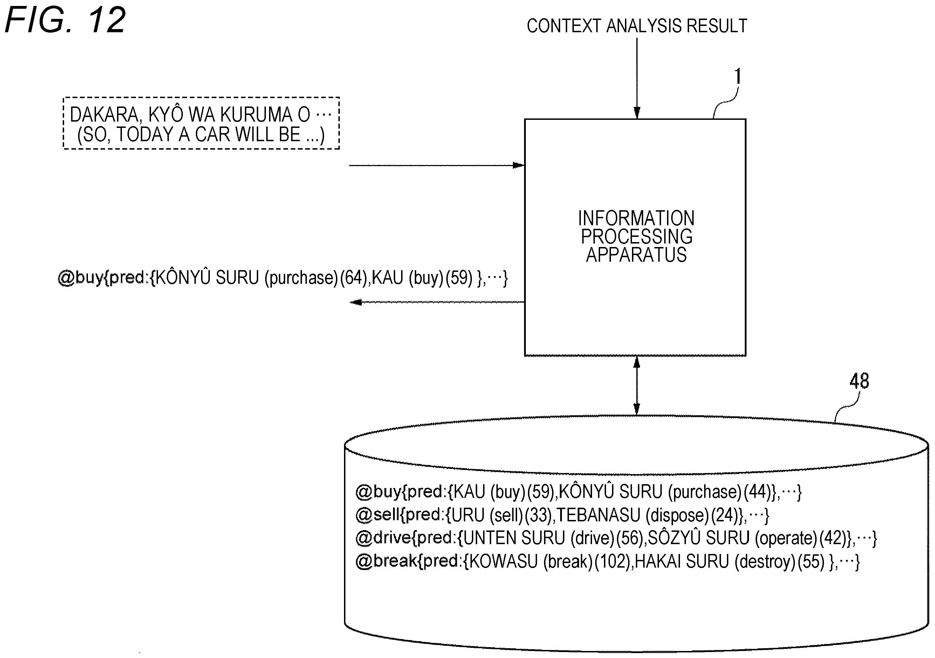

For example, as illustrated in Fig. 12, it is assumed that the semantic frame determination unit 62 determines the semantic frame @buy of the concept "buy" from the semantic frame @buy of the concept "buy", the semantic frame @sell of the concept "sell", the semantic frame @drive of the concept "drive", the semantic frame @break of the concept "break", and the like stored in the semantic frame DB 48. In this case, scores of the words stored in the predicate pred of the semantic frame @buy of the concept "buy" stored in the semantic frame DB 48 are 59 for "KAU (buy)" and 44 for "KÔNYÛ SURU (purchase)".

In contrast, it is assumed that a result is obtained in which priority of "KÔNYÛ SURU (purchase)" is increased on the basis of the content analysis of the context analysis unit 102. The information processing apparatus 1 reflects the content analysis result and outputs the semantic frame @buy of the concept "buy" in which the priority of "KÔNYÛ SURU (purchase)" is increased. In the example of Fig. 12, the semantic frame @buy of the concept "buy" is output, in which the score of "KÔNYÛ SURU (purchase)" is adjusted to be higher by adding 20 to the score of "KÔNYÛ SURU (purchase)" so that the score of "KÔNYÛ SURU (purchase)" is set to 64 while the score of "buy" is 59.

A specific example will be described. For example, it is assumed that a user inputs a character string "TÔDAI" when generating an e-mail message.

In a case where, as a situation of the user before generating the message, the user searched a website for a weekend drive course and reserved a rental car, "TÔDAI (lighthouse)" is output as a first input character prediction candidate for the input character string "TÔDAI".

In contrast, in a case where, as a situation of the user before generating the message, the user attends a cram school every day and purchased a collection of past problems of university entrance examinations by online shopping, "TÔDAI (The University of Tokyo)" is output as a first input character prediction candidate for the input character string "TÔDAI".

According to the information processing apparatus 1 according to the second embodiment, it is possible to improve, as in the first embodiment, prediction accuracy when the next input character candidate is predicted and presented, and in addition, it is possible to output an input character prediction candidate that matches action or intention of the user.

An embodiment to which the present technology is applied is not limited to the embodiments described above, and various modifications can be made without departing from the scope of the present technology.

For example, a mode in which all or a part of the plurality of embodiments described above are combined as appropriate can be adopted.

In the examples described above, an example in which the character string input to the information processing apparatus 1 is input as text data has been described. However, the character string input to the information processing apparatus 1 may be a character string such as a voice uttered by a user. In this case, for example, the acquisition unit 21 may perform processing of converting the character string input as a voice signal into text data, processing of converting an input character prediction candidate into a voice signal in a final output stage, or the like, as required.

For example, in a case where a user utters "ASU NO ÔSAKI NO (In Osaki, tomorrow's)", a subsequent portion of the utterance can be predicted as "TENKIYOHÔ (weather forecast)", and a response speed can be increased.

Furthermore, for example, in a case where a user utters a voice command "TAITANIKKU (Titanic)" and input character string information corresponding to the voice command is input, and action log information including GPS position information indicating a position of the user and time information is supplied to the information processing apparatus 1 as context information of the user, the information processing apparatus 1 predicts a character string such as "MISETE (let me see)" or "KIKITAI (I want to listen to)" as the next predicted utterance of the user, converts the character string into voice information, and outputs the voice information. Application software which has acquired the voice information of "KIKITAI (I want to listen to)" as the output from the information processing apparatus 1 selects and executes processing of reproducing music of a movie "Titanic" instead of reproducing the movie "Titanic". The application software which has acquired the voice information of "MISETE (let me see)" as the output from the information processing apparatus 1 selects and executes processing of reproducing the movie "Titanic" instead of reproducing the music of the movie "Titanic".

An example in which one semantic frame is determined for the input character string, and one or more words stored in the predicate pred in the semantic frame are output as the input character prediction candidates has been described above. However, two or more semantic frames may be determined, and one or more words stored in the predicate pred in each semantic frame may be output as the input character prediction candidates. Specifically, for example, for the input character string "DAKARA, KYÔ WA KURUMA 0 (So, today a car will be)", "KAU (bought)" and "KÔNYÛ SURU (purchased)" which are the words belonging to the predicate pred of the semantic frame @buy of the concept "buy", and "URU (sold)" and "TEBANASU (disposed)" which are the words belonging to the predicate pred of the semantic frame @sell of the concept "sell" may be output as the input character prediction candidates.

Alternatively, one semantic frame may be determined for the input character string, and words of predetermined arguments obj, time, place, nsubj, ins, src, goal, and exp may be simultaneously output as the input character prediction candidates together with one or more words stored in the predicate pred in the semantic frame. For example, for a input character string "ASU NO NOMIKAI DE (at a drinking party tomorrow)", "TABERU (eat)" which is a word belonging to a predicate pred of a semantic frame @eat of a concept "eat", and "NIKURYÔRI 0 (meat dish)" using "NIKURYÔRI (meat dish)"which is a word belonging to the argument obj of the semantic frame @eat may be output simultaneously as the input character prediction candidates.

The information processing apparatus 1 is only required to include a configuration that at least determines and outputs a semantic frame including a word obtained by predicting a character string to be input next from information (including text information and voice information) indicating an input character string.

### <3. Computer Configuration Example>

The series of processing described above can be executed by hardware or by software. In a case where the series of processing is executed by software, a program constituting the software is installed in a computer. Here, the computer includes a microcomputer incorporated in dedicated hardware, or a general-purpose personal computer capable of executing various functions by installing various programs, for example.

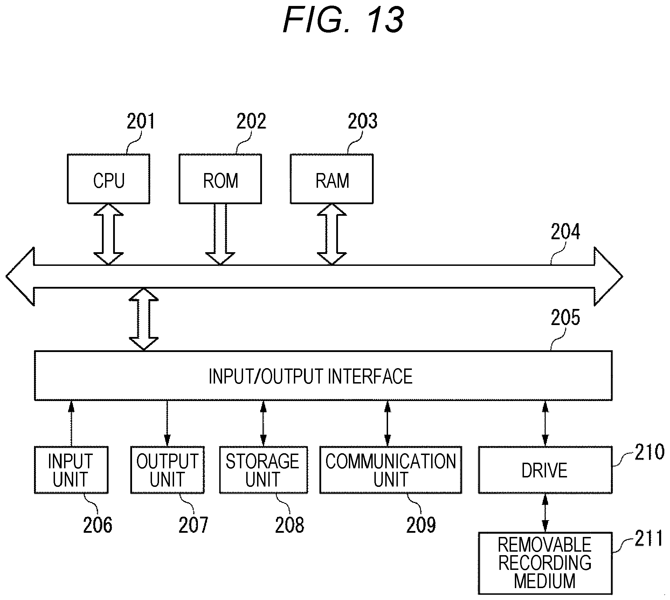

Fig. 13 is a block diagram illustrating a configuration example of hardware of a computer that executes the series of processing described above by a program.

In the computer, a central processing unit (CPU) 201, a read only memory (ROM) 202, and a random access memory (RAM) 203 are mutually connected by a bus 204.

An input/output interface 205 is further connected to the bus 204. An input unit 206, an output unit 207, a storage unit 208, a communication unit 209, and a drive 210 are connected to the input/output interface 205.

The input unit 206 includes a keyboard, a mouse, and a microphone. The output unit 207 includes a display and a speaker. The storage unit 208 includes hard disk and a non-volatile memory. The communication unit 209 includes a network interface. The drive 210 drives a removable recording medium 211 such as a magnetic disk, an optical disk, a magneto-optical disk, or a semiconductor memory.

In the computer configured as described above, the series of processing described above is performed by the CPU 201, for example, by loading the program stored in the storage unit 208 into the RAM 203 via the input/output interface 205 and the bus 204 to execute the program.

In the computer, the program can be installed in the storage unit 208 via the input/output interface 205 by mounting the removable recording medium 211 on the drive 210. Furthermore, the program can be received by the communication unit 209 via a wired or wireless transmission medium such as a local area network, the Internet, or digital satellite broadcasting, and can be installed in the storage unit 208. Alternatively, the program can be installed in advance in the ROM 202 or the storage unit 208.

In the present specification, as a matter of course, the steps described in the flowcharts may be processed in time series along the described order. However, the steps may not necessarily be processed in time series, and may be executed in parallel or at any necessary timing, such as when a call is made.

Furthermore, each step described in the flowcharts described above can be executed by one apparatus, or can be shared and executed by a plurality of apparatuses.

Moreover, in a case where a plurality of types of processing is included in one step, the plurality of types of processing included in the one step can be executed by one apparatus, or can be shared and executed by a plurality of apparatuses.

The present technology can take a configuration of cloud computing in which one function is shared and processed in cooperation by a plurality of apparatuses through a network.

Note that the effects described in the present specification are merely examples and are not limited, and effects other than those described in the present specification may be provided.

Note that the present technology can also include the following configurations.
(1) An information processing apparatus including
   a semantic frame determination unit configured to determine and output a semantic frame including a word obtained by predicting a character string to be input next from information indicating an input character string.
(2) The information processing apparatus according to (1), further including
   a context analysis unit configured to analyze a situation related to a user and determine a related semantic frame that is a semantic frame highly related to the analyzed situation of the user,
   in which the semantic frame determination unit determines the semantic frame on the basis of a result of adjusting priority of one or more retrieved semantic frames using the related semantic frame.
(3) The information processing apparatus according to (1) or (2), in which
   the semantic frame is a data set in which words used when a predetermined concept is verbalized are collected.
(4) The information processing apparatus according to any one of (1) to (3), in which
   the semantic frame includes a predicate and one or more arguments, and
   the word obtained by predicting a character string to be input next is a word stored as the predicate of the semantic frame.
(5) The information processing apparatus according to (4), in which
   a score is assigned to a word of the predicate or the argument of the semantic frame, and
   the semantic frame determination unit determines a semantic frame having a highest score as the semantic frame including the word obtained by predicting a character string to be input next.
(6) The information processing apparatus according to any one of (1) to (5), further including
   a semantic frame DB configured to store one or more of the semantic frames,
   in which the semantic frame determination unit searches the semantic frame DB for the semantic frame including the word obtained by predicting a character string to be input next, and determines the semantic frame.
(7) The information processing apparatus according to any one of (1) to (6), further including
   a synonym/near-synonym determination unit configured to determine a synonym or a near-synonym of the word included in the semantic frame.
(8) The information processing apparatus according to (7), further including
   a prediction candidate generation unit configured to output, as words obtained by predicting a character string to be input next, the word included in the semantic frame and the synonym or the near-synonym of the word.
(9) The information processing apparatus according to (7) or (8), further including
   a synonym/near-synonym dictionary DB configured to store a synonym or a near-synonym for one or more words,
   in which the synonym/near-synonym determination unit searches the synonym/near-synonym dictionary DB for the synonym or the near-synonym of the word included in the semantic frame, and determines the synonym or the near-synonym.
(10) The information processing apparatus according to (9), further including:
   an interpretation extension unit configured to generate a plurality of sentences from one sentence by performing grammatical extension and lexical extension; and
   a distributed expression generation unit configured to represent words in distributed expressions from the plurality of sentences generated by the interpretation extension unit,
   in which the synonym/near-synonym dictionary DB stores the words represented in the distributed expressions.
(11) An information processing method including
   a step of determining and outputting, by an information processing apparatus, a semantic frame including a word obtained by predicting a character string to be input next from information indicating an input character string.

### REFERENCE SIGNS LIST

- 1: Information processing apparatus
- 21: Acquisition unit
- 22: Morpheme analysis unit
- 23: Phrase analysis unit
- 24: Semantic frame storage unit
- 25: Prediction candidate generation unit
- 43: Interpretation extension unit
- 44: Word distributed expression generation unit
- 45: Synonym/near-synonym dictionary DB
- 46: Semantic role assignment unit
- 47: Semantic frame construction unit
- 48: Semantic frame DB
- 61: Parsing unit
- 62: Semantic frame determination unit
- 63: Synonym/near-synonym determination unit
- 101: Context acquisition unit
- 102: Context analysis unit
- 201: CPU
- 202: ROM
- 203: RAM
- 206: Input unit
- 207: Output unit
- 208: Storage unit
- 209: Communication unit
- 210: Drive

## Claims

1. An information processing apparatus comprising
a semantic frame determination unit configured to determine and output a semantic frame including a word obtained by predicting a character string to be input next from information indicating an input character string.

2. The information processing apparatus according to claim 1, further comprising
a context analysis unit configured to analyze a situation related to a user and determine a related semantic frame that is a semantic frame highly related to the analyzed situation of the user,
wherein the semantic frame determination unit determines the semantic frame on a basis of a result of adjusting priority of one or more retrieved semantic frames using the related semantic frame.

3. The information processing apparatus according to claim 1, wherein
the semantic frame includes a data set in which words used when a predetermined concept is verbalized are collected.

4. The information processing apparatus according to claim 3, wherein
the semantic frame includes a predicate and one or more arguments, and
the word obtained by predicting a character string to be input next includes a word stored as the predicate of the semantic frame.

5. The information processing apparatus according to claim 4, wherein
a score is assigned to a word of the predicate or the argument of the semantic frame, and
the semantic frame determination unit determines a semantic frame having a highest score as the semantic frame including the word obtained by predicting a character string to be input next.

6. The information processing apparatus according to claim 1, further comprising
a semantic frame DB configured to store one or more of the semantic frames,
wherein the semantic frame determination unit searches the semantic frame DB for the semantic frame including the word obtained by predicting a character string to be input next, and determines the semantic frame.

7. The information processing apparatus according to claim 1, further comprising
a synonym/near-synonym determination unit configured to determine a synonym or a near-synonym of the word included in the semantic frame.

8. The information processing apparatus according to claim 7, further comprising
a prediction candidate generation unit configured to output, as words obtained by predicting a character string to be input next, the word included in the semantic frame and the synonym or the near-synonym of the word.

9. The information processing apparatus according to claim 7, further comprising
a synonym/near-synonym dictionary DB configured to store a synonym or a near-synonym for one or more words,
wherein the synonym/near-synonym determination unit searches the synonym/near-synonym dictionary DB for the synonym or the near-synonym of the word included in the semantic frame, and determines the synonym or the near-synonym.

10. The information processing apparatus according to claim 9, further comprising:
an interpretation extension unit configured to generate a plurality of sentences from one sentence by performing grammatical extension and lexical extension; and
a distributed expression generation unit configured to represent words in distributed expressions from the plurality of sentences generated by the interpretation extension unit,
wherein the synonym/near-synonym dictionary DB stores the words represented in the distributed expressions.

11. An information processing method comprising
a step of determining and outputting, by an information processing apparatus, a semantic frame including a word obtained by predicting a character string to be input next from information indicating an input character string.
